# EUROPÄISCHE PATENTANMELDUNG

(11) **EP 2 840 271 A2**
(43) Veröffentlichungstag der Anmeldung: **25.02.2015**
(21) Anmeldenummer: 14180796.6
(22) Anmeldetag: 13.08.2014
(51) Int. Cl.: F16C 35/077, F16C 33/58, F16C 19/26

(54) **Lageranordnung mit einem Haltering und Verfahren dafür**

(30) Priorität: 22.08.2013 US 201361868892 P
(71) Anmelder: Schaeffler Technologies GmbH & Co. KG, 91074 Herzogenaurach (DE)
(72) Erfinder: Evans, Matthew, Warren, MI 48092 (US); Higdon, Kate, Royal Oak, 48073 (US)

(57) **Zusammenfassung**

Eine Lageranordnung, welche Folgendes aufweist: ein Gehäuse mit einer ersten umfänglich angeordneten Rille (110), ein Lager, das einen äußeren Laufring (104) mit einer zweiten umfänglich angeordneten Rille (114) aufweist, und einen Haltering (106), der innerhalb der ersten und der zweiten umfänglich angeordneten Rille angeordnet ist. Ein Verfahren zum Festhalten eines Lagers, welches folgende Schritte aufweist: Anordnen eines ersten Abschnitts eines Rings innerhalb einer Rille in einem äußeren Laufring, Installieren eines Gehäuses radial um den Laufring, um in Kontakt mit dem Laufring zu gelangen, Anordnen eines zweiten Abschnitts des Rings innerhalb einer Rille im Gehäuse, Bringen der Temperatur des Gehäuses und des Laufrings auf ein erstes Niveau, Fixieren des Laufrings in Bezug auf das Gehäuse mit einem Kontakt zwischen dem Laufring und dem Gehäuse, Erhöhen der Temperatur des Gehäuses und des Laufrings auf ein zweites höheres Niveau, Erzeugen eines radialen Zwischenraums zwischen dem Gehäuse und dem äußeren Laufring und Fixieren einer Position des Laufrings in in Bezug auf das Gehäuse mit dem Haltering.

## Beschreibung

Diese Anmeldung beansprucht den Vorteil nach 35 U.S.C. §119(e) aus der am 22. August 2013 eingereichten vorläufigen US-Patentanmeldung 61/868 892, wobei diese Anmeldung hier durch Verweis in ihrer Gesamtheit aufgenommen ist.

### Technisches Gebiet

Die vorliegende Offenbarung betrifft eine Lageranordnung mit einem Haltering, der in jeweiligen Rillen in einem Gehäuse angeordnet ist, und einem äußeren Laufring für die Lageranordnung, welcher dafür eingerichtet ist, eine Position des äußeren Laufrings in Bezug auf das Gehäuse zu fixieren. Der Wärmeausdehnungskoeffizient des Halterings ist zumindest gleich dem Wärmeausdehnungskoeffizienten des Gehäuses, um zu gewährleisten, dass der Haltering in der Rille im Gehäuse bleibt, wenn die Lageranordnung erhöhten Temperaturen ausgesetzt wird.

### Hintergrund

Lageranordnungen, beispielsweise für Brennkraftmaschinen, weisen bekanntermaßen ein Gehäuse, das aus einem ersten Material besteht, und einen äußeren Laufring, der von dem Gehäuse radial umschlossen ist und aus einem zweiten Material besteht, auf. Für die richtige Funktionsweise der Lageranordnung muss der äußere Laufring axial in Bezug auf das Gehäuse fixiert werden. Typischerweise hat das erste Material, wie Aluminium oder eine Aluminiumlegierung, einen ersten Wärmeausdehnungskoeffizienten und hat das zweite Material, wie Stahl, einen zweiten Wärmeausdehnungskoeffizienten, der kleiner als der erste Wärmeausdehnungskoeffizient ist. Wenn die Lageranordnung daher erhöhten Temperaturen ausgesetzt wird (beispielsweise wenn die Brennkraftmaschine arbeitet), dehnt sich das Gehäuse stärker radial nach außen aus als der äußere Laufring, wodurch der Kontakt zwischen dem Gehäuse und dem äußeren Laufring unterbrochen wird, was eine axiale Fixierung des äußeren Laufrings in Bezug auf das Gehäuse verhindert.

Es ist bekannt, den äußeren Laufring im Gehäuse mit einem engen Interferenz- oder Presssitz zu installieren, der zu einer hohen kompressiven Kraft zwischen dem äußeren Laufring und dem Gehäuse führt. Dieser enge Sitz erhöht jedoch die Schwierigkeit der Installation der Lageranordnung und bewirkt eine Verziehung, welche den Betrieb der Lageranordnung stört. Die US-Patentanmeldungsveröffentlichung 2012/0304813 offenbart die Verwendung von Halteklemmen, welche ein hohes Maß an Komplexität zur Lageranordnung hinzufügen und auch die Kosten und die Abmessungen der Lageranordnung erhöhen. Die US-Patentanmeldungsveröffentlichung 2009/0080824 offenbart ein Wärmekompensationselement, das in direktem Kontakt mit einem Gehäuse und den Rollenelementen der Lageranordnung steht. Das Wärmekompensationselement kompensiert die Wärmeausdehnung durch Ausüben von Druck direkt auf die Rollenelemente, was den Betrieb der Rollenelemente stören kann. Die US-Patentanmeldungsveröffentlichung 2006/0160651 offenbart die Verwendung eines Zwischenlegerings in Eingriff mit einer axialen Fläche eines Lagerlaufrings, um die Wärmeausdehnung in einem Differenzialgetriebe durch axiale Ausdehnung zum Komprimieren des Lagerlaufrings auszugleichen. Das US-Patent 8 286 533 offenbart die Verwendung von Halteklemmen, welche die Komplexität der Lageranordnung in hohem Maße erhöhen und auch die Kosten und Abmessungen der Lageranordnung erhöhen. Das US-Patent 4 549 823 offenbart die Verwendung eines Elastomerrings zwischen einem Gehäuse und einem äußeren Laufring einer Lageranordnung.

### Kurzfassung

Gemäß hier erläuterten Aspekten ist eine Lageranordnung vorgesehen, welche Folgendes aufweist: ein Gehäuse mit einer ersten umfänglich angeordneten Rille, ein Lager, das einen äußeren Laufring mit einer zweiten umfänglich angeordneten Rille aufweist, und einen Haltering, der innerhalb der ersten und der zweiten umfänglich angeordneten Rille angeordnet ist.

Gemäß hier erläuterten Aspekten ist ein Verfahren zum Festhalten eines Lagers vorgesehen, welches folgende Schritte aufweist: Anordnen eines ersten Abschnitts eines ringförmigen Halterings innerhalb einer ersten umfänglich angeordneten Rille für einen äußeren Laufring des Lagers, Installieren eines Gehäuses radial um den äußeren Laufring, so dass das Gehäuse den äußeren Laufring berührt, Anordnen eines zweiten Abschnitts des Halterings innerhalb einer zweiten umfänglich angeordneten Rille für das Gehäuse, Bringen jeweiliger Temperaturen des Gehäuses und des äußeren Laufrings auf ein erstes Niveau, Fixieren axialer und radialer Positionen des äußeren Laufrings in Bezug auf das Gehäuse mit einem Kontakt zwischen dem äußeren Laufring und dem Gehäuse, Erhöhen der jeweiligen Temperaturen des Gehäuses und des äußeren Laufrings auf ein zweites Niveau, das höher als das erste Niveau ist, Erzeugen eines radialen Zwischenraums zwischen dem Gehäuse und dem äußeren Laufring und Fixieren der axialen und radialen Positionen des axialer und radialer Positionen mit dem Haltering.

Gemäß hier erläuterten Aspekten ist eine Lageranordnung vorgesehen, welche Folgendes aufweist: ein Lager mit einem ringförmigen äußeren Laufring, welches aus einem ersten Material mit einem ersten Wärmeausdehnungskoeffizienten aufgebaut ist und Folgendes aufweist: eine radial äußere Umfangsfläche und eine erste umfänglich angeordnete Rille in der radial äußeren Umfangsfläche, ein ringförmiges Gehäuse, das radial um das Lager angeordnet ist, aus einem zweiten Material aufgebaut ist, das einen zweiten Wärmeausdehnungskoeffizienten aufweist, der größer als der erste Wärmeausdehnungskoeffizient ist, und Folgendes aufweist: eine radial innere Umfangsfläche und eine zweite umfänglich angeordnete Rille in der radial inneren Umfangsfläche und einen ringförmigen Haltering, welcher Folgendes aufweist: einen ersten Abschnitt, der innerhalb der ersten umfänglich angeordneten Rille angeordnet ist, und einen zweiten Abschnitt, der innerhalb der zweiten umfänglich angeordneten Rille angeordnet ist.

### Kurzbeschreibung der Zeichnung

Verschiedene Ausführungsformen werden nur als Beispiel mit Bezug auf die anliegende schematische Zeichnung offenbart, in der entsprechende Bezugssymbole entsprechende Teile angeben.

Es zeigen:
Figur 1A eine perspektivische Ansicht eines Zylinderkoordinatensystems, worin die in der vorliegenden Anmeldung verwendete räumliche Terminologie dargestellt ist,
Figur 1B eine perspektivische Ansicht eines Objekts im Zylinderkoordinatensystem aus Figur 1A, worin die in der vorliegenden Anmeldung verwendete räumliche Terminologie dargestellt ist,
Figur 2 eine Teilschnittansicht einer Lageranordnung mit einem Haltering,
Figur 3 eine perspektivische Ansicht des Bereichs 3 in Figur 2,
Figur 4A eine detaillierte Darstellung des Gehäuses und des äußeren Laufrings aus Figur 2 bei einer niedrigen Temperatur,
Figur 4B eine detaillierte Darstellung des Gehäuses und des äußeren Laufrings aus Figur 2 bei einer hohen Temperatur,
Figur 5 eine schematische Vorderansicht einer Lageranordnung mit einem Haltering, worin ein zweiteiliges Gehäuse dargestellt ist, und
Figur 6 eine Teilschnittansicht einer Lageranordnung mit einem Haltering.

### Detaillierte Beschreibung

Zu Beginn sei bemerkt, dass gleiche Bezugszahlen in verschiedenen Ansichten der Zeichnung identische oder funktionell ähnliche Strukturelemente der Offenbarung identifizieren. Es sei bemerkt, dass die beanspruchte Offenbarung nicht auf die offenbarten Aspekte beschränkt ist.

Ferner ist zu verstehen, dass diese Offenbarung nicht auf die spezielle Methodologie, die speziellen Materialien und die speziellen Modifikationen, die beschrieben werden, beschränkt ist und daher natürlich variieren kann. Es ist auch zu verstehen, dass die hier verwendete Terminologie nur dazu dient, spezielle Aspekte zu beschreiben und den Schutzumfang der vorliegenden Offenbarung nicht einschränken soll.

Sofern nichts anderes definiert wird, haben alle hier verwendeten technischen und wissenschaftlichen Begriffe die gleiche Bedeutung, wie Durchschnittsfachleute auf dem Gebiet, zu dem diese Offenbarung gehört, allgemein verstehen werden. Es ist zu verstehen, dass alle Verfahren, Vorrichtungen oder Materialien, die den hier beschriebenen ähnlich oder gleichwertig sind, in der Praxis oder beim Testen der Offenbarung verwendet werden können.

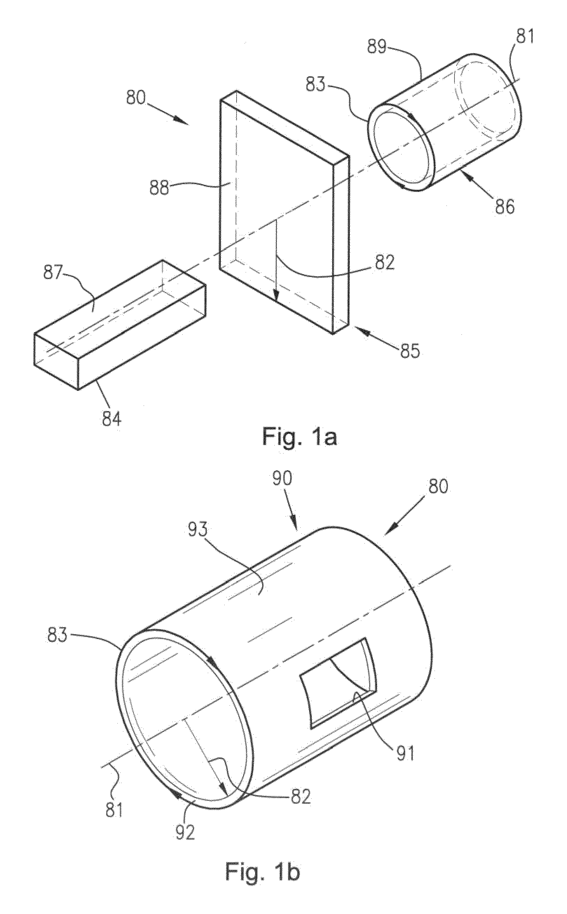

Figur 1A ist eine perspektivische Ansicht eines Zylinderkoordinatensystems 80, worin die in der vorliegenden Offenbarung verwendete räumliche Terminologie dargestellt ist. Die vorliegende Offenbarung wird zumindest teilweise in Zusammenhang mit einem Zylinderkoordinatensystem beschrieben. Das System 80 weist eine Längsachse 81 auf, die als Referenz für die folgenden Richtungsbegriffe und räumlichen Begriffe verwendet wird. Die Adjektive "axial", "radial" und "umfänglich" beziehen sich auf eine Orientierung parallel zur Achse 81, zum Radius 82 (der orthogonal zur Achse 81 ist) bzw. zum Umfang 83. Die Adjektive "axial", "radial" und "umfänglich" beziehen sich auch auf eine Orientierung parallel zu jeweiligen Ebenen. Zur Erklärung der Anordnung der verschiedenen Ebenen werden Objekte 84, 85 und 86 verwendet. Die Fläche 87 des Objekts 84 bildet eine axiale Ebene. Das heißt, dass die Achse 81 eine Linie entlang der Fläche bildet. Die Fläche 88 des Objekts 85 bildet eine radiale Ebene. Das heißt, dass der Radius 82 eine Linie entlang der Fläche bildet. Die Fläche 89 des Objekts 86 bildet eine umfängliche Ebene. Das heißt, dass der Umfang 83 eine Linie entlang der Fläche bildet. Als ein weiteres Beispiel verläuft eine axiale Bewegung oder Anordnung parallel zur Achse 81, eine radiale Bewegung oder Anordnung parallel zum Radius 82 und eine umfängliche Bewegung oder Anordnung parallel zum Umfang 83. Eine Drehung bezieht sich auf die Achse 81.

Die Adverbien "axial", "radial" und "umfänglich" beziehen sich auf eine Orientierung parallel zur Achse 81, zum Radius 82 bzw. zum Umfang 83. Die Adverbien "axial", "radial" und "umfänglich" beziehen sich auch auf eine Orientierung parallel zu jeweiligen Ebenen.

Figur 1B ist eine perspektivische Ansicht eines Objekts 90 im Zylinderkoordinatensystem 80 aus Figur 1A, worin die in der vorliegenden Offenbarung verwendete räumliche Terminologie dargestellt ist. Das zylindrische Objekt 90 repräsentiert ein zylindrisches Objekt in einem Zylinderkoordinatensystem und soll die vorliegende Offenbarung in keiner Weise einschränken. Das Objekt 90 weist eine axiale Fläche 91, eine radiale Fläche 92 und eine Umfangsfläche 93 auf. Die Fläche 91 ist Teil einer axialen Ebene, die Fläche 92 ist Teil einer radialen Ebene, und die Fläche 93 ist eine Umfangsfläche.

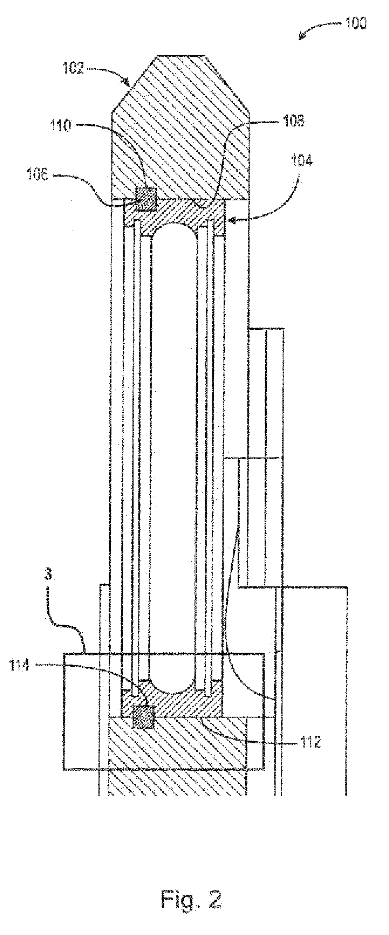

Figur 2 ist eine Teilschnittansicht einer Lageranordnung 100 mit einem Haltering.

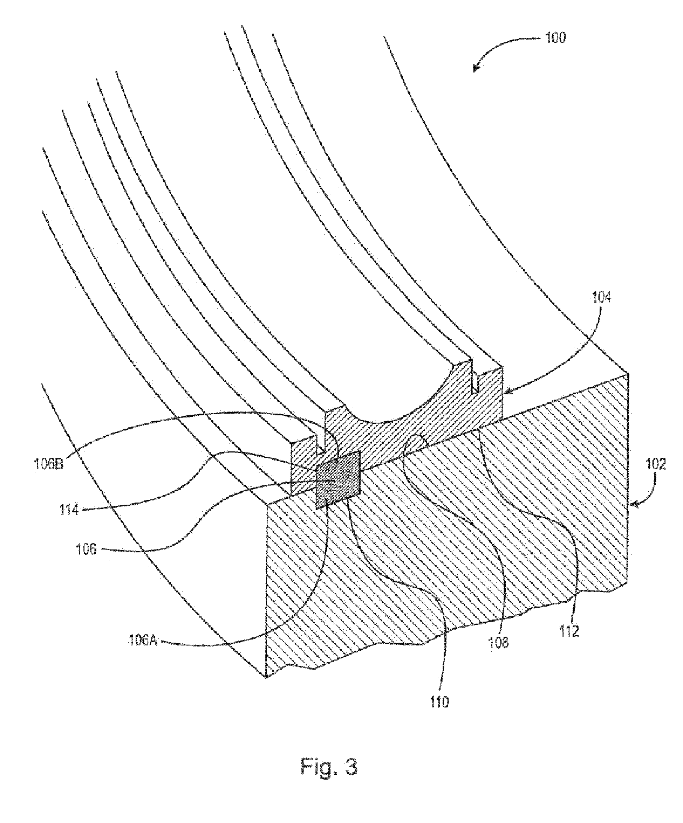

Figur 3 ist eine perspektivische Ansicht des Bereichs 3 in Figur 2. Das Folgende sollte angesichts der Figuren 2 und 3 betrachtet werden. Die Anordnung 100 weist eine Drehachse AR, ein ringförmiges Gehäuse 102, einen ringförmigen äußeren Laufring 104 und einen ringförmigen Haltering 106 auf. Das Gehäuse 102 weist eine radial innere Umfangsfläche 108 mit einer umfänglich angeordneten Rille 110 auf. Das heißt, dass die Rille 110 die Fläche 108 schneidet. Der Laufring 104 weist eine radial äußere Umfangsfläche 112 mit einer umfänglich angeordneten Rille 114 auf. Das heißt, dass die Rille 114 die Fläche 112 schneidet. Der Ring 106 ist in den Rillen 110 und 112 angeordnet. Beispielsweise ist der radial äußerste Abschnitt 106A des Rings 106 in der Rille 110 angeordnet und ist der radial innerste Abschnitt 106B des Rings 106 in der Rille 114 angeordnet. Das Gehäuse 102 ist radial um den Laufring 104 herum angeordnet. Wie nachstehend weiter beschrieben wird, beschränkt der Haltering den äußeren Laufring axial und/oder radial in Bezug auf das Gehäuse. Mit "umfänglich angeordnet" ist gemeint, dass sich die jeweilige Rille kontinuierlich um das Gehäuse oder den Laufring in der vorstehend definierten Umfangsrichtung erstreckt und eine Tiefe in der radialen Richtung, wie vorstehend definiert, und eine Breite in der axialen Richtung, wie vorstehend definiert, aufweist. Gemäß einer als Beispiel dienenden Ausführungsform erstrecken sich eine oder beide Rillen 110 und 114 um 360 Grad in der Umfangsrichtung. Gemäß einer als Beispiel dienenden Ausführungsform erstrecken sich eine oder beide Rillen 110 und 114 über weniger als 360 Grad in der Umfangsrichtung. Beispielsweise sind die umfänglichen Enden der Rille 110 durch einen Abschnitt der Fläche 108 getrennt.

Gemäß einer als Beispiel dienenden Ausführungsform ist das Gehäuse 102 aus einem Material, wie beispielsweise Aluminium oder einer Aluminiumlegierung, aufgebaut, das einen bestimmten Wärmeausdehnungskoeffizienten aufweist, und ist der Haltering 106 aus einem anderen Material mit einem Wärmeausdehnungskoeffizienten aufgebaut, der größer oder gleich dem Wärmeausdehnungskoeffizienten für das Gehäuse 102 ist. Gemäß einer als Beispiel dienenden Ausführungsform sind das Gehäuse 102 und der Ring 106 aus dem gleichen Material aufgebaut. Gemäß einer als Beispiel dienenden Ausführungsform ist der Laufring 104 beispielsweise aus einem Material wie Stahl, das einen Wärmeausdehnungskoeffizienten aufweist, der kleiner ist als die jeweiligen Wärmeausdehnungskoeffizienten des Gehäuses und des Rings, aufgebaut.

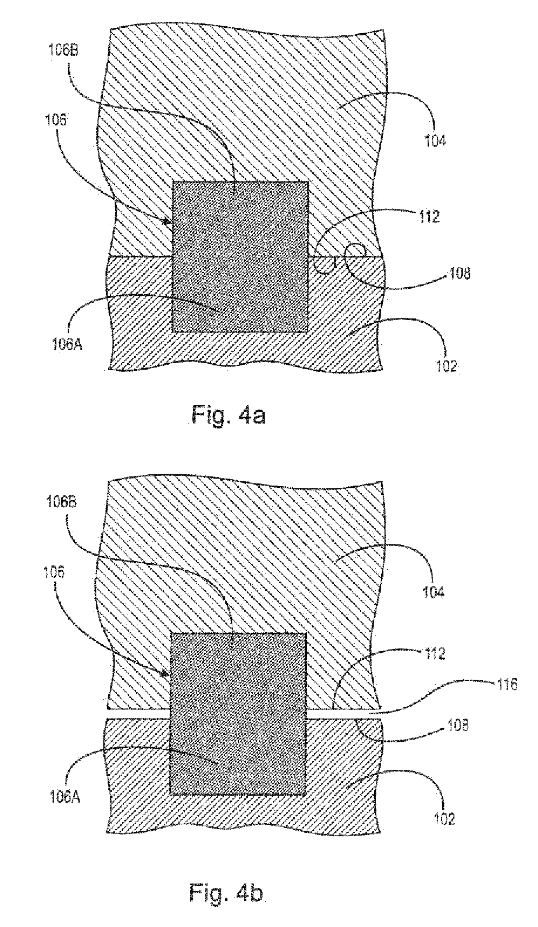

Figur 4A ist eine detaillierte Darstellung des Gehäuses und des äußeren Laufrings aus Figur 2 bei einer niedrigen Temperatur. Das Folgende sollte angesichts der Figuren 2 bis 4A betrachtet werden. Wenn das Gehäuse 102 und der äußere Laufring 104 jeweils im Wesentlichen bei einer verhältnismäßig niedrigen Temperatur liegen, ist der äußere Laufring 104 durch den Kontakt zwischen dem Gehäuse 102 und dem äußeren Laufring 104 axial und radial in Bezug auf das Gehäuse 102 fixiert. Beispielsweise gibt es einen kompressiven Eingriff oder Reibungseingriff zwischen den Flächen 108 und 112, wodurch die Position des Laufrings 104 in Bezug auf das Gehäuse 102 fixiert wird. Demgemäß gibt es, wie in Figur 4A dargestellt ist, keinen radialen Zwischenraum zwischen den Flächen 108 und 112. Wenn die Anordnung 100 beispielsweise in einer Brennkraftmaschine verwendet wird, kann die niedrige Temperatur als eine Nicht-Betriebstemperatur für die Maschine angesehen werden, wobei die Maschine beispielsweise nicht arbeitet und sich bei der Umgebungstemperatur befindet oder die Maschine zu arbeiten begonnen hat, sich jedoch noch nicht aufgeheizt hat. Die Nicht-Betriebstemperatur kann auch als eine Temperatur definiert werden, bei der die Wärmeausdehnung des Gehäuses 102 und des äußeren Laufrings 104 nicht aufgetreten ist oder bei der die jeweiligen Wärmeausdehnungen des Gehäuses 102 und des äußeren Laufrings 104 im Wesentlichen gleich sind.

Figur 4B ist eine detaillierte Darstellung des Gehäuses und des äußeren Laufrings aus Figur 2 bei einer hohen Temperatur. Das Folgende sollte angesichts der Figuren 2 bis 4B betrachtet werden. Wenn das Gehäuse 102 und der äußere Laufring 104 jeweils im Wesentlichen bei einer verhältnismäßig hohen Temperatur liegen, wird der radiale Zwischenraum 116 zwischen dem Gehäuse 102 und dem äußeren Laufring 104 erzeugt (zwischen den Flächen 108 und 112) und wird der äußere Laufring 104 durch den äußeren Laufring 104 axial und radial in Bezug auf das Gehäuse 102 fixiert. Wenn die Anordnung 100 beispielsweise in einer Brennkraftmaschine verwendet wird, kann die hohe Temperatur als eine Betriebstemperatur für die Maschine angesehen werden, wobei die Maschine beispielsweise arbeitet und der Innenverbrennungsprozess die Temperatur des Gehäuses 102 und des äußeren Laufrings 104 deutlich über die Umgebungstemperatur erhöht hat. Die Betriebstemperatur kann auch als eine Temperatur definiert werden, bei der die Wärmeausdehnung des Gehäuses 102 mit einer höheren Rate als die Wärmeausdehnung des äußeren Laufrings 104 aufgetreten ist oder auftritt.

Infolge der Erhöhung der Temperatur und der Differenzen zwischen den jeweiligen Ausdehnungskoeffizienten für das Gehäuse 102 und den äußeren Laufring 104 (der Koeffizient ist für das Gehäuse 102 höher), dehnt sich das Gehäuse 102 mit einer größeren Rate aus als der äußere Laufring 104, wodurch der Zwischenraum 116 erzeugt wird. Infolge des Zwischenraums 116 wird der vorstehend erwähnte kompressive Eingriff oder Reibungseingriff zwischen dem Gehäuse 102 und dem äußeren Laufring 104 im Wesentlichen aufgehoben. Daher reicht der Eingriff zwischen dem Gehäuse 102 und dem äußeren Laufring 104 nicht mehr aus, um den äußeren Laufring 104 in Bezug auf das Gehäuse 102 festzuhalten (die axialen und radialen Positionen des äußeren Laufrings 104 in Bezug auf das Gehäuse 102 zu fixieren). Der Haltering 106 bleibt jedoch in Kontakt mit dem Gehäuse 102 und dem äußeren Laufring 104 (in den Rillen 108 und 112 angeordnet), um den äußeren Laufring 104 in Bezug auf das Gehäuse 102 festzuhalten.

Wenn sich das Gehäuse 102 beispielsweise ausdehnt, um den Zwischenraum 116 zu erzeugen, bleiben die Abschnitte 106A und 106B davon in den Rillen 110 bzw. 114. Weil der Wärmeausdehnungskoeffizient des Rings 106 ferner größer ist als der Wärmeausdehnungskoeffizient des Laufrings 104, dehnt sich der Abschnitt 106A innerhalb der Rille 114 aus, um den Kontaktdruck (kompressiven Druck oder Reibungsdruck) in axialer und/oder radialer Richtung zwischen dem Abschnitt 106B und dem Laufring 104 zu erhöhen, wodurch der Ring 106 fester in Bezug auf den Laufring 104 fixiert wird. Auch dehnt sich der Ring 106 radial nach außen aus, wodurch gewährleistet wird, dass der Abschnitt 106A in der Rille 110 angeordnet bleibt. Gemäß einer als Beispiel dienenden Ausführungsform, bei der der Wärmeausdehnungskoeffizient des Rings 106 größer ist als der Wärmeausdehnungskoeffizient des Gehäuses 102, dehnt sich der Abschnitt 106A innerhalb der Rille 110 aus, wodurch der Kontaktdruck zwischen dem Abschnitt 106B und dem Gehäuse 102 in axialer und/oder radialer Richtung erhöht wird. Diese Erhöhung des Kontaktdrucks erleichtert ferner die Fixierung des Rings 106 in Bezug auf das Gehäuse 102 und daher die Fixierung des Laufrings 104 in Bezug auf das Gehäuse 102.

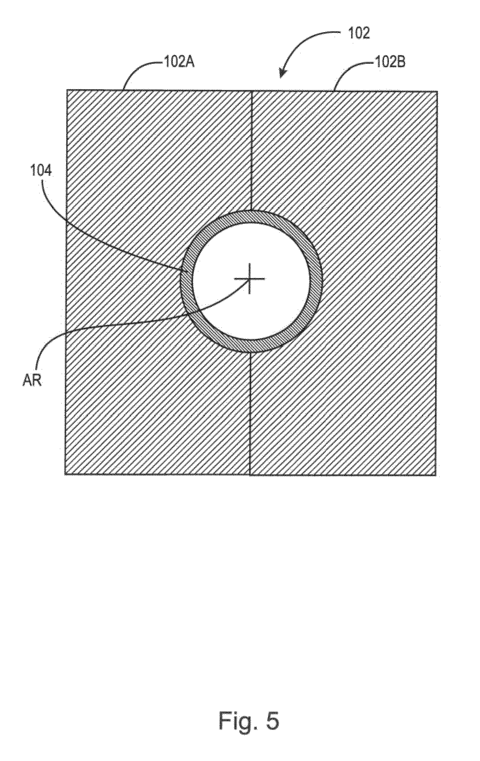

Figur 5 ist eine schematische Vorderansicht der Lageranordnung 100 mit einem Haltering, worin ein zweiteiliges Gehäuse dargestellt ist. Das Folgende sollte angesichts der Figuren 2, 3 und 5 betrachtet werden. Gemäß einer als Beispiel dienenden Ausführungsform weist das Gehäuse 102 getrennte Abschnitte 102A und 102B auf, die durch beliebige auf dem Fachgebiet bekannte Mittel fest miteinander verbunden sind. Die Abschnitte 102A und 102B erleichtern die Herstellung der Anordnung 100. Beispielsweise kann der Ring 106 mit einer Diskontinuität hergestellt werden, um zu ermöglichen, dass der Ring 106 radial ausgedehnt wird, um über den Laufring 104 zu laufen und in die Rille 114 zu gleiten. Die Abschnitte 102A und 102B können dann zusammen angeordnet werden, so dass die Rille 110 den Ring 106 umschließt.

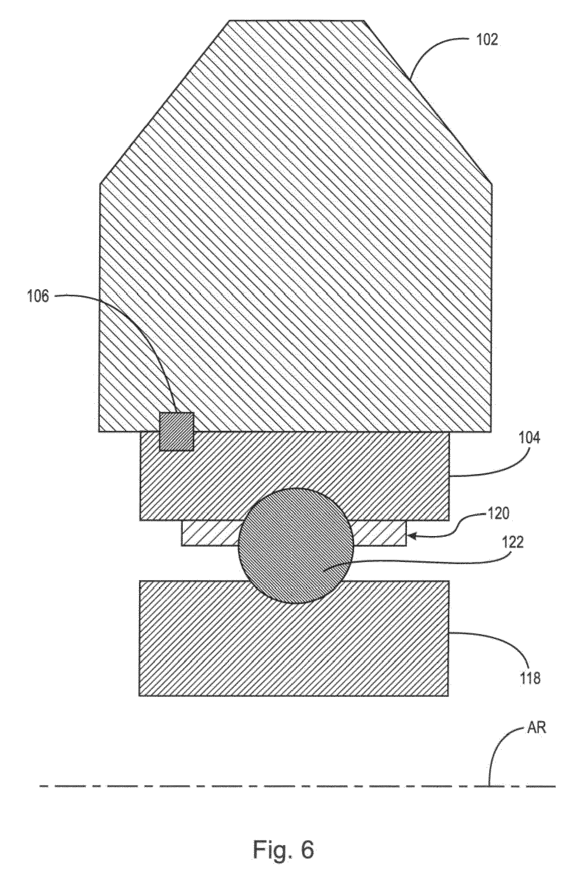

Figur 6 ist eine Teilschnittansicht der Lageranordnung 100 mit einem Haltering. In Figur 6 ist die Anordnung 100 in einer als Beispiel dienenden Konfiguration mit einem inneren Laufring 118, einer Einfassung 120 und einem Rollenelement 122 dargestellt. Es sei bemerkt, dass die Anordnung 100 nicht auf die Verwendung mit der Konfiguration aus Figur 6 beschränkt ist.

Es ist zu verstehen, dass verschiedene der vorstehend offenbarten und andere Merkmale und Funktionen oder Alternativen davon wünschenswerterweise zu vielen anderen verschiedenen Systemen oder Anwendungen kombiniert werden können. Verschiedene gegenwärtig nicht vorhergesehene oder nicht erwartete Alternativen, Modifikationen, Variationen oder Verbesserungen daran, die auch von den folgenden Ansprüchen eingeschlossen sein sollen, können von Fachleuten später vorgenommen werden.

## Patentansprüche

1. Lageranordnung, welche Folgendes umfasst:
ein Gehäuse mit einer ersten umfänglich angeordneten Rille,
ein Lager, das einen äußeren Laufring mit einer zweiten umfänglich angeordneten Rille aufweist, und
einen Haltering, der innerhalb der ersten und der zweiten umfänglich angeordneten Rille angeordnet ist.

2. Lageranordnung nach Anspruch 1, wobei:
das Gehäuse eine radial innere Umfangsfläche aufweist und die erste umfänglich angeordnete Rille die radial innere Umfangsfläche schneidet, und
der äußere Laufring eine radial äußere Umfangsfläche aufweist und die zweite umfänglich angeordnete Rille die radial äußere Umfangsfläche schneidet.

3. Lageranordnung nach Anspruch 1, wobei:
der Haltering den äußeren Laufring in Bezug auf das Gehäuse axial festhält.

4. Lageranordnung nach Anspruch 1, wobei:
der Haltering den äußeren Laufring in Bezug auf das Gehäuse radial festhält.

5. Lageranordnung nach Anspruch 1, wobei:
der Haltering den äußeren Laufring in Bezug auf das Gehäuse axial und radial festhält.

6. Lageranordnung nach Anspruch 1, wobei:
das Gehäuse aus einem ersten Material mit einem ersten Wärmeausdehnungskoeffizienten aufgebaut ist und
der Haltering aus einem zweiten Material mit einem zweiten Wärmeausdehnungskoeffizienten aufgebaut ist, der größer oder gleich dem ersten Wärmeausdehnungskoeffizienten ist.

7. Lageranordnung nach Anspruch 1, wobei:
das Gehäuse aus einem ersten Material mit einem ersten Wärmeausdehnungskoeffizienten aufgebaut ist,
der äußere Laufring aus einem zweiten Material mit einem zweiten Wärmeausdehnungskoeffizienten aufgebaut ist, der kleiner als der erste Wärmeausdehnungskoeffizient ist, und
der Haltering aufgebaut ist aus:
dem ersten Material oder
einem dritten Material mit einem dritten Wärmeausdehnungskoeffizienten, der größer oder gleich dem ersten Wärmeausdehnungskoeffizienten ist.

8. Lageranordnung nach Anspruch 1, wobei das Gehäuse einen ersten und einen zweiten getrennten Abschnitt aufweist, welche den äußeren Laufring radial umschließen und fest miteinander verbindbar sind.

9. Lageranordnung nach Anspruch 1, wobei:
wenn das Gehäuse und der äußere Laufring jeweils bei einer ersten Temperatur liegen, der äußere Laufring durch den Kontakt zwischen dem Gehäuse und
dem äußeren Laufring axial und radial in Bezug auf das Gehäuse fixiert ist.

10. Lageranordnung nach Anspruch 9, wobei, wenn das Gehäuse und der äußere Laufring jeweils bei einer zweiten Temperatur liegen, die größer als die erste Temperatur ist:
ein radialer Zwischenraum zwischen dem Gehäuse und dem äußeren Laufring existiert und
der äußere Laufring durch den Haltering axial und radial in Bezug auf das Gehäuse fixiert ist.

11. Verfahren zum Festhalten eines Lagers, welches folgende Schritte umfasst:
Anordnen eines ersten Abschnitts eines ringförmigen Halterings innerhalb einer ersten umfänglich angeordneten Rille für einen äußeren Laufring des Lagers,
Installieren eines Gehäuses radial um den äußeren Laufring, so dass das Gehäuse den äußeren Laufring berührt,
Anordnen eines zweiten Abschnitts des Halterings innerhalb einer zweiten umfänglich angeordneten Rille für das Gehäuse,
Bringen jeweiliger Temperaturen des Gehäuses und des äußeren Laufrings auf ein erstes Niveau,
Fixieren axialer und radialer Positionen des äußeren Laufrings in Bezug auf das Gehäuse mit einem Kontakt zwischen dem äußeren Laufring und dem Gehäuse,
Erhöhen der jeweiligen Temperaturen des Gehäuses und des äußeren Laufrings auf ein zweites Niveau, das höher als das erste Niveau ist,
Erzeugen eines radialen Zwischenraums zwischen dem Gehäuse und dem äußeren Laufring und
Fixieren der axialen und radialen Positionen des äußeren Laufrings in Bezug auf das Gehäuse mit dem Haltering.

12. Verfahren nach Anspruch 11, wobei:
das Gehäuse eine radial innere Umfangsfläche aufweist,
der äußere Laufring eine radial äußere Umfangsfläche aufweist,
das Fixieren der axialen und radialen Positionen des äußeren Laufrings mit einem Kontakt zwischen dem äußeren Laufring und dem Gehäuse das Erzeugen einer kompressiven Kraft oder Reibungskraft zwischen der radial inneren und
der radial äußeren Umfangsfläche aufweist und
das Erzeugen eines radialen Zwischenraums zwischen dem Gehäuse und dem äußeren Lautring das Verringern der kompressiven Kräfte und Reibungskräfte aufweist.

13. Verfahren nach Anspruch 11, wobei das Fixieren der axialen und radialen Positionen des äußeren Laufrings in Bezug auf das Gehäuse mit dem Haltering das Halten des ersten und des zweiten Abschnitts des Halterings innerhalb der ersten bzw. der zweiten umfänglich angeordneten Rille aufweist.

14. Verfahren nach Anspruch 11, wobei:
der Haltering eine äußere Umfangsfläche aufweist, wobei das Verfahren ferner folgenden Schritt umfasst:
wenn die jeweiligen Temperaturen des Gehäuses und des äußeren Laufrings auf das zweite Niveau ansteigen, Erweitern der äußeren Umfangsfläche für den Haltering radial nach außen.

15. Verfahren nach Anspruch 11, welches ferner folgende Schritte umfasst:
wenn die jeweiligen Temperaturen des Gehäuses und des äußeren Laufrings auf das zweite Niveau ansteigen:
Erhöhen des Kontaktdrucks zwischen dem Haltering und dem äußeren Laufring und
Beibehalten oder Erhöhen des Kontaktdrucks zwischen dem Haltering und dem Gehäuse.

16. Verfahren nach Anspruch 11, welches ferner folgende Schritte umfasst:
wenn die jeweiligen Temperaturen des Gehäuses und des äußeren Laufrings auf das zweite Niveau ansteigen:
Erhöhen des Kontaktdrucks zwischen dem Haltering und dem äußeren Laufring und
Erhöhen des Kontaktdrucks zwischen dem Haltering und dem Gehäuse.

17. Verfahren nach Anspruch 11, welches ferner folgende Schritte umfasst:
wenn die jeweiligen Temperaturen des Gehäuses und des äußeren Laufrings auf das zweite Niveau ansteigen:
radiales Ausdehnen des ersten Laufrings mit einer ersten Rate,
radiales Ausdehnen des Gehäuses mit einer zweiten Rate, die größer als die erste Rate ist, und
radiales Ausdehnen des Halterings mit einer dritten Rate, die größer oder gleich der zweiten Rate ist.

18. Lageranordnung, welche Folgendes umfasst:
ein Lager mit einem ringförmigen äußeren Laufring:
welches aus einem ersten Material mit einem ersten Wärmeausdehnungskoeffizienten aufgebaut ist und
Folgendes aufweist:
eine radial äußere Umfangsfläche und
eine erste umfänglich angeordnete Rille in der radial äußeren Umfangsfläche,
ein ringförmiges Gehäuse:
das radial um das Lager angeordnet ist,
aus einem zweiten Material aufgebaut ist, das einen zweiten Wärmeausdehnungskoeffizienten aufweist, der größer als der erste Wärmeausdehnungskoeffizient ist, und
Folgendes aufweist:
eine radial innere Umfangsfläche und
eine zweite umfänglich angeordnete Rille in der radial inneren Umfangsfläche und
einen ringförmigen Haltering, welcher Folgendes aufweist:
einen ersten Abschnitt, der innerhalb der ersten umfänglich angeordneten Rille angeordnet ist, und
einen zweiten Abschnitt, der innerhalb der zweiten umfänglich angeordneten Rille angeordnet ist.

19. Lageranordnung nach Anspruch 18, wobei der Haltering dafür eingerichtet ist, den äußeren Laufring in Bezug auf das Gehäuse axial und radial festzuhalten.

20. Lageranordnung nach Anspruch 18, wobei, wenn das Gehäuse und der äußere Laufring jeweils bei einer Temperatur liegen:
ein radialer Zwischenraum zwischen dem Gehäuse und dem äußeren Laufring existiert,
der erste Abschnitt innerhalb der ersten umfänglich angeordneten Rille angeordnet bleibt und
der zweite Abschnitt innerhalb der zweiten umfänglich angeordneten Rille angeordnet bleibt.
